# EUROPEAN PATENT SPECIFICATION

(11) **EP 1 216 617 B1**
(45) Date of publication and mention of the grant of the patent: **02.04.2008**
(21) Application number: 01102514.5
(22) Date of filing: 05.02.2001
(51) Int. Cl.: A01N 65/00, A01N 47/46, A01N 35/04, A01N 35/02, A01N 31/04

(54) **Composition with acaricidal activity derived from plants**
Von Pflanzen abgeleitete Zusammensetzung mit akarizider Aktivität
Composition à activité acaricide dérivée de plantes

(30) Priority: 23.12.2000 KR 2000081256
(43) Date of publication of application: 26.06.2002
(73) Proprietor: Naturobiotech Co., Ltd., Suwon, 441-853 (KR)
(72) Inventor: Ahn, Young-Joon, Songpa-gu, Seoul 138-240 (KR); Kim, Young-Soo, Dongjak-gu, Seoul 156-754 (KR); Kim, Soon-Il, Suwon-shi, Kyonggi-do 441-340 (KR); Kim, Hyun-Kyung, Taejon (KR)
(74) Representative: Viering, Jentschura & Partner

(56) References cited:
- EP-A- 0 428 276
- WO-A-01/00033
- WO-A-97/14309
- WO-A-99/53763
- DE-A- 19 824 683
- DATABASE WPI Section Ch, Week 198816 Derwent Publications Ltd., London, GB; Class D21, AN 1988-108910 XP002198019 & JP 63 057697 A (SHISEIDO CO LTD), 12 March 1988 (1988-03-12)
- DATABASE WPI Section Ch, Week 200049 Derwent Publications Ltd., London, GB; Class C04, AN 2000-533556 XP002198020 & CN 1 254 695 A (SUN B), 31 May 2000 (2000-05-31)
- S.D.SARKER ET AL.: "Identification and Ecdysteroid Antagonist Activity of Three Resveratrol Trimers (Suffruticosols A, B and C) from Paeonia suffruticosa." TETRAHEDRON., vol. 55, no. 2, 1999, pages 513-524, XP002198017 ELSEVIER SCIENCE PUBLISHERS, AMSTERDAM., NL ISSN: 0040-4020
- DATABASE WPI Section Ch, Week 200020 Derwent Publications Ltd., London, GB; Class D22, AN 2000-233134 XP002198021 & JP 2000 053923 A (SEKISUI CHEM IND CO LTD), 22 February 2000 (2000-02-22)
- DATABASE WPI Section Ch, Week 199441 Derwent Publications Ltd., London, GB; Class C05, AN 1994-329872 XP002198022 & JP 06 256128 A (INAHATA KORYO KK), 13 September 1994 (1994-09-13)
- DATABASE CA [Online] CHEMICAL ABSTRACTS SERVICE, COLUMBUS, OHIO, US; retrieved from STN-INTERNATIONAL, accession no. 133:220347 CA XP002198018 & CN 1 243 742 A (PEOP. REP. CHINA) 9 February 2002 (2002-02-09)
- PATENT ABSTRACTS OF JAPAN vol. 1998, no. 05, 30 April 1998 (1998-04-30) & JP 10 007578 A (TAISHO PHARMACEUT), 13 January 1998 (1998-01-13)
- DATABASE WPI Section Ch, Week 199734 Derwent Publications Ltd., London, GB; Class B04, AN 1997-364544 XP002214425 & CN 1 109 350 A (LIU W), 4 October 1995 (1995-10-04)
- DATABASE WPI Section Ch, Week 199208 Derwent Publications Ltd., London, GB; Class B04, AN 1992-060692 XP002214426 & JP 04 005237 A (NONOKAWA SHOJI YG), 9 January 1992 (1992-01-09)
- DATABASE WPI Section Ch, Week 200002 Derwent Publications Ltd., London, GB; Class C03, AN 2000-013909 XP002214427 & CN 1 228 921 A (YANG J), 22 September 1999 (1999-09-22)
- DATABASE CA [Online] CHEMICAL ABSTRACTS SERVICE, COLUMBUS, OHIO, US; retrieved from STN-INTERNATIONAL Database accession no. 132:1251 CA XP002214414 & JP 11 335218 A (SEKISUI CHEMICAL) 7 December 1999 (1999-12-07)
- DATABASE CAB [Online] CAB INTERNATIONAL, WALLINGFORD, OXON, GB; G.B.LOCKWOOD: "The major constituents of the essential oils of Cinnamomum cassia Blume growing in Nigeria" retrieved from STN-INTERNATIONAL Database accession no. 79:36705 CABA XP002214415 & PLANTA MEDICA, vol. 36, no. 4, 1979, pages 380-381,
- DATABASE CAB [Online] CAB INTERNATIONAL, WALLINGFORD, OXON, GB; F.OTTOBONI ET AL.: "House dust mites prevention in Italy" retrieved from STN-INTERNATIONAL Database accession no. 94:73423 CABA XP002214416 & BOLLETTINO DI ZOOLOGICA AGRARIA E DI BACHICOLTURA, vol. 24, no. 2, 1992, pages 113-120,
- DATABASE WPI Section Ch, Week 199127 Derwent Publications Ltd., London, GB; Class C03, AN 1991-198038 XP002214428 & JP 03 123714 A (DAINIPPON JOCHUGIKU KK), 27 May 1991 (1991-05-27)
- DATABASE WPI Section Ch, Week 199338 Derwent Publications Ltd., London, GB; Class A97, AN 1993-299512 XP002214436 & JP 05 213701 A (JUMOKU CHUSHUTSU SEIBUN RIYO), 24 August 1993 (1993-08-24)
- DATABASE WPI Section Ch, Week 199408 Derwent Publications Ltd., London, GB; Class B04, AN 1994-061960 XP002214437 & JP 06 016515 A (NIPPON KAYAKU KK), 25 January 1994 (1994-01-25)
- DATABASE WPI Section Ch, Week 199918 Derwent Publications Ltd., London, GB; Class C05, AN 1999-210703 XP002214431 & JP 11 049623 A (KAWADA M), 23 February 1999 (1999-02-23)
- DATABASE CA [Online] CHEMICAL ABSTRACTS SERVICE, COLUMBUS, OHIO, US; retrieved from STN-INTERNATIONAL Database accession no. 115:201141 CA XP002214417 & JP 03 066602 A (OSAKA SEIYAKU) 22 March 1991 (1991-03-22)
- DATABASE CA [Online] CHEMICAL ABSTRACTS SERVICE, COLUMBUS, OHIO, US; retrieved from STN-INTERNATIONAL Database accession no. 132:233050 CA XP002214418 & JP 2000 095604 A (SEKISUI CHEMICAL) 4 April 2000 (2000-04-04)
- DATABASE CA [Online] CHEMICAL ABSTRACTS SERVICE, COLUMBUS, OHIO, US; retrieved from STN-INTERNATIONAL Database accession no. 117:126484 CA XP002214419 & JP 04 149103 A (TAISHO PHARMACEUTICAL) 22 May 1992 (1992-05-22)
- DATABASE WPI Section Ch, Week 199120 Derwent Publications Ltd., London, GB; Class C03, AN 1991-144786 XP002214432 & JP 03 081202 A (DAINIPPON JOCHUGIKU KK), 5 April 1991 (1991-04-05)
- PATENT ABSTRACTS OF JAPAN vol. 2000, no. 05, 14 September 2000 (2000-09-14) & JP 2000 053923 A (SEKISUI CHEMICAL), 22 February 2000 (2000-02-22)
- DATABASE CA [Online] CHEMICAL ABSTRACTS SERVICE, COLUMBUS, OHIO, US; M.ASACHI ET AL.: "Acaricidal and ovicidal effects of volatile chemicals of plants on Dermatophagoides. Control of mites in beddings" retrieved from STN-INTERNATIONAL Database accession no. 121:29254 CA XP002214420 & KYOTO-FU EISEI KOGAI KENKYUSHO NENPO, vol. 38, 1993, pages 93-95,
- DATABASE WPI Section Ch, Week 199427 Derwent Publications Ltd., London, GB; Class A92, AN 1994-222253 XP002214433 & JP 06 158002 A (FP CORP), 7 June 1994 (1994-06-07)
- DATABASE BIOSIS [Online] BIOSCIENCES INFORMATION SERVICE, PHILADELPHIA, PA, US; 1985 KIM I-S ET AL: "VOLATILE COMPOUNDS CHARACTERIZING THE FLAVOR OF KOREAN HORSERADISH ROOTS" Database accession no. PREV198682092051 XP002214421 & KOREAN JOURNAL OF NUTRITION, vol. 18, no. 4, 1985, pages 293-300, ISSN: 0367-6463
- DATABASE CA [Online] CHEMICAL ABSTRACTS SERVICE, COLUMBUS, OHIO, US; M.ADACHI ET AL.: "Breeding deterrent effects of volatile chemicals in plants to Dermatophagoides farinae Hughes" retrieved from STN-INTERNATIONAL Database accession no. 119:88850 CA XP002214422 & KYOTO-FU EISEI KOGAI KENKYUSHO NENPO, vol. 37, 1992, pages 46-50,
- DATABASE CAB [Online] CAB INTERNATIONAL, WALLINGFORD, OXON, GB; W.RITTER ET AL.: "Chemotherapy (of Varroa jacobsoni infestations)" retrieved from STN-INTERNATIONAL Database accession no. 81:7478 CA XP002214423 & ALLGEMEINE DEUTSCHE IMKERZEITUNG, vol. 14, no. 5, 1980, pages 138-146,
- DATABASE CAB [Online] CAB INTERNATIONAL, WALLINGFORD, OXON, GB; N.N.PANDITA ET AL.: "Control of ectoparasitic infestation in country goats" retrieved from STN-INTERNATIONAL Database accession no. 91:126779 CABA XP002214424 & SMALL RUMINAT RESEARCH, vol. 3, no. 4, 1990, pages 403-412,
- DATABASE WPI Section Ch, Week 199835 Derwent Publications Ltd., London, GB; Class C03, AN 1998-411782 XP002214434 & RU 2 099 946 C (VOLG SAREPTA STOCK CO), 27 December 1997 (1997-12-27)

## Description

### BACKGROUND OF THE INVENTION

### (a) Field of the Invention

The present invention relates to an acaricidal(miticidal) composition isolated from plants, and more particularly, to an acaricidal composition comprising crude extracts from plants and chemical compounds.

### (b) Description of the Related Art

Mites are a significant cause of allergies, and in particular they cause bronchial asthma and nasal inflammation (Maunsell, K., D.C. Wratith and A.M. Cunnington. 1968. Mites and house dust allergy in bronchial asthma. Lancet 1: 1267-1270). Mites belonging to the Pyroglyphidae family inhabit dust (Voorhorst, R., M.I.A. Spieksma-Boezeman and F. Th. Spieksma. 1964. A mite Dermatophagoides spp. is the producer of the house dust allergen. Allerg. Asthma 10(6): 329-334). *Dermatophagoides pteronyssinus, D. farinae, D. microceras,* and *Euroglyphus maynei* cause atrophic symptoms such as bronchial asthma, nasal inflammation and eczema (International Workshop Report. 1989. Dust mite allergens and asthma - a worldwide problem. The Journal of Allergy and Clinical Immunology 83: 416-427; International Workshop Report. 1992. Dust mite allergens and asthma; Report of a second international Workshop. The Journal of Allergy and Clinical Immunology 89: 1046-1060).

Recently, changes in living environments such as a rise in the number of apartment households with installed central heating, space heating and carpets have contributed to an optimum environment for mites, thus they can proliferate rapidly and survive the four seasons indoors. In Korea, four species of mites are reported, and the most common are *Dermatophagoides pteronyssinus* and *Dermatophagoides farinae.*

House dust mites have been found in carpets, clothes, furniture, mattress and bedclothes. House dust mites are distributed not only in temperate regions but are present in nearly all places of residence (de Boer, R. 1991. An indirect effect of cleaning on house-dust mites (Dermatophagoides spp.) in carpets. The acari: reproduction, development, and life history strategies. New York. Chapman and Hall. p.517-518).

House dust mites are photophobic and they require the proper temperature, humidity, and shed skin scales as a food source. To control house dust mites, methods exist for cleaning dust from houses, sterilizing furniture, clothes and carpets where dust exists to 70°C, or for regulating temperature and humidity. But these methods are restricted in application, and it is difficult to remove the mites from a house.

It has been reported that lindane, pirimiphos-methyl, benzyl benzoate, dibutyl phthalate and diethyl m-toluamide have an acaricidal effect (Hellet-Haupt A. and J. R. Busvine. 1974. Tests of acaricides against house dust mites (Dermatophagoides pteronyssinus, Dermatophagoides farinae). J. Med. Entomol. 2(5):551-558). Lindane is the most acaricidally effective and long-lasting, but due to toxicity its use has been restricted for homes. The second best acaricidal compound among the above compounds, pirimiphos-methyl, has low toxicity against mammals, and it has been put to practical use in order to control mites inhabiting stored grain. Mitchell (Mitchell, E.B., S. Wilkins, J. McCallum Deighton and T.A.E. Platts-Mills. 1985. Reduction of house dust mite allergen levels in the home: use of the acaricide, pirimiphos methyl. Clin. Allergy 15: 234-240) reported that pirimiphos-methyl was able to control 60% of mites inhabiting carpets, and 50% of mites inhabiting chairs.

Recently, compounds used as acaricides have been benzyl benzoate, paragerm and so on (Penaud, A., J. Nourrit, P. Timon-David and J. Charpid. 1977. Results of a controlled trial of the acaricide paragerm on Dermatophagoides spp. In dwelling houses. Clin. Allergy 7: 49-53; Schober, G., G. Wetter, E. Bischoff, J.E.M.H. van Bronswijk and F. M. Kniest. 1987. Control of house dust mites(Pyroglyphidae) with home disinfectants. Exp. Appl. Acarol. 3: 179-189).

Control of mites has been primarily dependent on chemical acaricides. However, use of these acaricides has caused mite resistance, and especially mites of *Pyroglyphidae* species having resistance to both DDT and lindane have been found (Bronswijk, J.E.M.H. van, J.M.C.P. Schonen, M.A.F. Berli and F.S. Lukoschus. 1971. On the abundance of Dermatophagoides pteronyssinus (Trouessart. 1897) (Pyroglyphidae: Acarina) in house dust. Res. Popul. Ecol. 8: 67-79). So, research has been carried out all over the world to detect alternatives for these agents. In order to develop natural acaricides much effort has been focused on plant materials used for folk remedies as well as aromatic compounds having pleasant perfume (Miyazaki, Y., M. Yatagai, and M. Takaoka. 1989. Jpn. J. Biometeor. 26: 105-108; Watanabe, F., S. Tadaki, M. Takaoka, S. Ishino and I. Morimoto. 1989. Killing Activities of the volatiles emitted from essential oils for Dermatophagoides pteronyssinus, Dermatophagoides farinae and Tyrophagus putrescentiae. Syoyakugaku Zasshi 43: 163-168; Yatagai, M. and S. Morita. 1991. Extractives from Yakusugi bogwood and their termicidal activity and growth regulation effects on plant seeds. Mokuzai Gakkishi J. Japan Wood Res. Soc. 37: 345-351; Morita, S., M. Yatagai and T. Ohira. 1991. Antimite and antifungal activities of the hexane extracts from yakusugi bogwood. Journal of the Japan Wood Research Soc. 37(4): 352-357).

WO-A-01/00033 discloses a pesticidal composition for the control of house dust mites which comprises in a mixture with an acceptable carrier, at least one plant essential oil compound or derivatives thereof selected from amyl cinnamic aldehyde, cinnamaldehyde and cinnamic alcohol and the like.

EP-A-0428276 discloses an acaricidal composition selected from the alkyl cinnamate, allyl cinnamate, cinnamyl acetate, cinnamyl propionate, cinnamyl butyrate and the like.

CA, AN:132:233050 & JP-A-095604 discloses an acaricidal composition comprising an oily fragrant substance or plant extract on sublimable carriers.

CA, AN:115:201141 & JP-A_03 066602 discloses an acaricidal activity composition comprising a cinnamaldehyde and(or 3-phenylpropanal.

WPI, AN 1999-210703 & JP-A-11-049623 discloses an acarid repellent comprising cinnamon leaf oil as a main component.

### SUMMARY OF THE INVENTION

It is an object of the present invention to provide a composition, which is composed of 3 medicinal plants and 3 essential oils with acaricidal activity.

For this object, the present invention provides an acaricide comprising one or more compounds selected from the group consisting of *Paeonia suffruticosa, Cnidlum officinale*, and *Cinnamomum cassia*.

Also, the present invention provides an acaricide comprising one or more compounds selected from the group consisting of hexane extracts or chloroform extracts isolated with methanol or chloroform from a methanol extract of *Cinnamomum cassia.*

Also, the present invention provides an acaricide comprising one or more compounds selected from the group consisting of *trans*-cinnamaldehyde (formula 1), cinamyl alcohol (formula 2) and salicylaldehyde (formula 3).

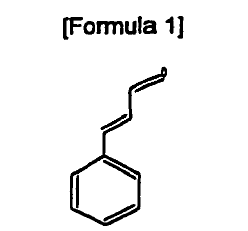

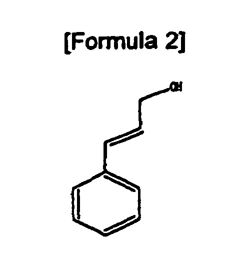

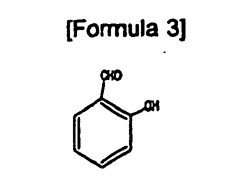

Also, the present invention provides an acaricide comprising one or more compounds selected from the group consisting of trans-clnnamaldehyde derivatives, cinamyl alcohol derivatives and salicylaldehyde derivatives.

### BRIEF DESCRIPTION OF THE DRAWINGS

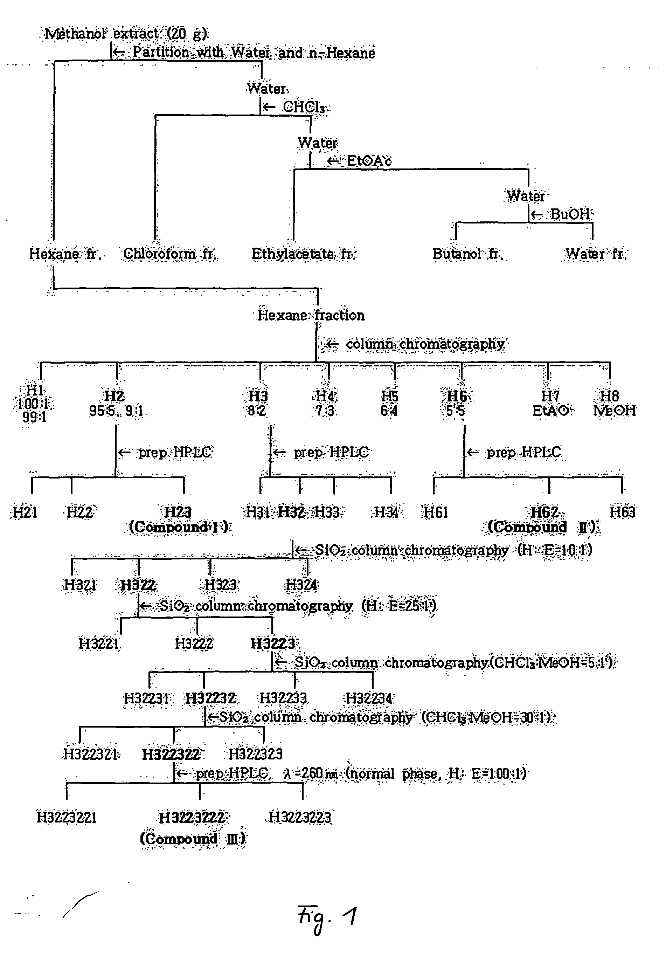

Fig 1 is a flow chart of the separating steps that isolate the acaricidally effective compounds from the hexane portion of methanol extracts from *Cinnamomum cassia.*

### DETAILED DESCRIPTION OF THE INVENTION

The inventor screened plants for acaricidal activity and found that *Paeonia suffruticosa, Cnididum officinale,* and *Cinnamomum cassia*, have acaricidal activity. The term "acaricidal activity" used herein means to kill mites. The present invention measured acaricidal activity against *Dermatophagoides pteronyssinus* and *Dermatophagoides farinae*, which are major mites in Korea as well as all over the world.

Methanol extracts were obtained from *Paeonia suffruticosa, Cnididum officinale* and *Cinnamomum cassia.* The above three materials have confirmed acaricidal activity for 2 species of house dust mites.

The present invention provides a composition for controlling mites. It is preferred that the composition is selected from the group consisting of *Paeonia suffruticosa, Cnididum officinale, and Cinnamomum cassia.* The *Cinnamomum cassia* can be replaced by cinnamon. More preferably, the compositions include one and more extracts selected from the group consisting of methanol extracts from *Paeonia suffruticosa,* methanol extracts from *Cnididum officinale,* and methanol extracts from *Cinnamomum cassia,*

Also, the present invention provides an acaricide for controlling mites made from the above medicinal plants, essential oils and extracts from these plants. The acaricide also contains the plant or methanol extracts and may contain materials that are added to a known insecticide. The amount of methanol extracts in the acaricide for mites ranges from about 0.01% to 70%. But the amount of methanol extracts is preferably adjusted for use, for example the type of acaricide and method for sprinkling the acaricide. The acaricide of the present invention can be formulated as a spray, a solution type ointment and a solid type ointment gel or smoke.

Also, the methanol extract from *Cinnamomum cassia* is isolated more by using hexane, chloroform, ethyl acetate and butanol. It was confirmed that hexane and chloroform fractions have acaricidal activity. Thus hexane and chloroform fractions can be applied to a composition for controlling mites and to an insecticide.

Also, the present invention provides *trans*-cinnamaldehyde, cinnamyl alcohol and salicylaldehyde isolated from *Cinnamomum cassia*. Said three fraction have acaricidal activity. The *trans*-cinnamaldehyde is the compound of formula 1, the cinnamyl alcohol is the compound of formula 2, and the salicylaldehyde is the compound of formula 3.

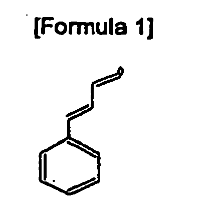

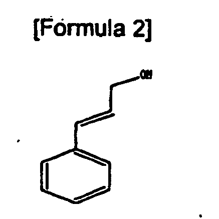

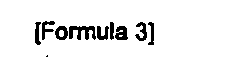

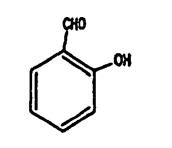

Also, the present invention provides an acaricide. It is possible to use each *trans*-cinnamaldehyde, cinnamyl alcohol and salicylaldehyde alone or all of them. The mixture containing *trans*-cinnamaldehyde, cinnamyl alcohol and salicyaldehyde has a synergistic effect for controlling mites compared to using each compound alone, so it is preferable to use a mixture of *trans-*cinnamaldehyde, cinnamyl alcohol and salicylaldehyde.

The acaricide of the present invention may also further contain other materials that are applied as common insecticides. One well-known pyrethroid acaricide is a synthetic derivative made from a compound of flower from *Chrysanthemum cinerariefolicum*, and it has a lower photolysis effect and higher toxicity than the original material. It is preferred that an acaricide contains one or more compounds selected from the group consisting of *trans*-cinnamaldehyde, cinnamyl alcohol and salicylaldehyde, in an amount ranging from 0.01% to 70%. But it is appropriate to regulate the amount of *trans*-cinnamaldehyde, cinnamyl alcohol and salicylaldehyde according to the application method of the acaricide and its formulation.

Also, in the present invention, *trans*-cinnamaldehyde, cinnamyl alcohol and salicylaldehyde are used as substrates in order to develop a derivative having increased acaricidal activity and eradication potential against a wide range of arthropods by modification of the structure of *trans*-cinnamaldehyde, cinnamyl alcohol and salicylaldehyde. The derivatives are novel compounds that are obtained by the addition or deletion of OH⁻ or other chemical structures of the common compounds having special activity, they do not have the problems associated with the known compounds, and they maintain a high activity.

Therefore the present invention provides an acaricide comprising *trans-*cinnamaldehyde derivatives, cinnamyl alcohol derivatives or salicylaldehyde derivatives.

The acaricide of the present invention was applied to mites by a fumigant or contact method. The extracts and active compounds derived from *Cinnamomum cassia,* its derivatives and active components from mustard oil and horseradish oil can be applied to harmful athropods in order to kill them.

The present Invention will be explained in more detail with reference to the following Examples.

### [Example 1] Preparation of sample, and plants and oils having acaricidal activity

### The methanol extracts

300 g of each of *Paeonia suffruticosa, Cnidium officinale*, and *Cinnamomum cassia* was finely powdered using a mixer, and the resultant was blended with 500 ml of methanol for 3 days in a 500 ml Erlenmeyer flask and extracted twice with methanol at room temperature and pooled. The combined filtrate was concentrated in vacuo at 35°C.

### [Test 1]

### Test mites

Two kinds of mites were used for the acaricidal activity. American house dust mite (*Dermatophagoides farinae*) and European house dust mite *(Dermatophagoide pteronyssinus*) were maintained at 75 ±5% RH (relative humidity) at 25 ±1°C, and were provided a feed mixture of fish meal and multi-vitamins in a ratio of 1 to 1 on a 12.5 x10.5 x5 cm container.

### Test of acaricidal activity

The starting concentration is important for the primary screening of bioactive compounds from plant extracts and oils. In the present invention, the concentrations of compounds were set up in specific ratios in a 2 ml microtube with 1 mg of the compounds for several tests, and the mites were observed with a microscope. 1 mg of the methanol extracts or oils were suspended with 40 µℓ of methanol and were transferred to a colorless microtube (2 Mℓ). The microtube was vertically shaken several times to disperse the contents to the wall and cap of the microtube and it was placed in a freeze dryer for 1 hour in order to volatilize the solvent. Twenty-five mites were placed on the prepared microtube, and all treatment groups were transferred to an incubator kept at 25 ±1°C. Active mites only were selected with a fine brush under a microscope. Mortalities were determined with a microscope at 24 hours and 48 hours after treatment. Mites were considered dead if appendages did not move when prodded with a fine brush. All tests were replicated four or more times. The percentage mortality was determined and transformed to arcsine square-root values for analysis of variance (ANOVA). Treatment means were compared and separated by Scheffe's test at the *P* = 0.05 (SAS Institute, 1996). Means (±standard error) of untransformed data are reported. Controls received 40 µℓ of methanol.

Table 1 shows acaricidal activity of the methanol extracts and oils.

**[Table 1]**

| Plant | Mortality (Means ±standard error, %) | | | |
|---|---|---|---|---|
| | *D. farinas* | | *D. pteronyssinus* | |
| | 24hr | 48hr | 24hr | 48hr |
| *Paeonia suffruticosa* | 98.3 ±1.7 | 100 | 100 | - |
| *Cinnamomum cassia* | 100 | - | 100 | - |
| *Cnidium officinale* | 88.3 ±6.0 | 95.0 ±5.0 | 91.7 ±4.4 | 98.3 ±1.7 |
| Cinnamon oil (*C.cassia*) | 100 | - | 100 | - |

Mean followed by the same letter in the column are not significantly different (*P* = 0.05, Scheffe's test). Mortalities were transformed to arcsine square-root before ANOVA. Means (±standard error) of untransformed data are reported.

The acaricidal activity shown in Table 1 was obtained from treatment with 1 mg of the methanol extracts or oils in a 2 ml microtube, and the time is the time elapsed after treatment with the methanol extracts and oils. The tests of Table 1 were replicated five times.

All the methanol extracts and oils except *Cnidium officinale* had a strong acaricidal activity of 100% against two species of house dust mites at 48 hours after treatment. In particular, *Cinnamomum cassia* and cinnamon oil had 100% acaricidal activity against mites at 24 hours after treatment.

### [Example 2]

The acaricidal compounds of the methanol extracts from *Cinnamomum cassia* prepared by Example 1 were isolated and purified. 20 g of the methanol extracts were suspended in 800 ml of distilled water and 800 ml of n-hexane. The mixture was transferred to a separatory funnel (2 ml), capped, and after shaking well, it was separated into a water portion and a hexane portion. After 30 min, a first hexane portion was separated using another separatory funnel. The water portion was mixed with 800 ml of hexane and separated to a second hexane portion in the same manner. The remaining water portion was blended with 800 ml of chloroform, capped, and after shaking well, it was separated into a water portion and a chloroform portion. After 30 min, a first chloroform portion was separated. The water portion was mixed with 800 ml of chloroform and separated to a second chloroform portion in the same manner as separating the hexane portion. The remaining water portion was blended with 800 ml of ethyl acetate and separated twice to an ethyl acetate portion in the same manner as separating the hexane portion. The remaining water portion was blended with 800 ml of butanol and separated to a butanol portion in the same way. A hexane portion, a chloroform portion, an ethyl acetate portion, a butanol portion and a water portion were obtained by the above separatory method. The water portion was concentrated in a freeze dryer, and the hexane portion, the chloroform portion, the ethyl acetate portion and the butanol portion were concentrated in an EYELA autojack NAJ-160(Japan).

The mortaltity was determined by performing the test 1 four times over the concentrated portion, and it is shown in Table 2

**[Table 2]**

| Portion | Number of treated mites | Mortality (Means ±standard error, %) | | | |
|---|---|---|---|---|---|
| | | *D. pteronyssinus* | | *D. farinae* | |
| | | 24hr | 48hr | 24hr | 48hr |
| Hexane portion | 100 | 100a | 100a | 100a | 100a |
| Chloroform portion | 100 | 100a | 100a | 100a | 100a |
| Ethyl acetate portion | 100 | 2.7 ±2.7b | 2.7 ±2.7b | 4.0±2.3b | 5.3±1.3b |
| Butanol portion | 100 | 5.3±1.3b | 6.7 ±1.3b | 6.7±1.3b | 6.7 ±1.3b |
| Water portion | 100 | 2.7 ±1.3b | 4.0 ±0b | 2.7 ±2.7b | 4.0 ±2.3b |
| Control | 100 | 0b | 0b | 0b | 0b |

Means followed by the same letter in column are not significantly different (*P* = 0.05, Scheffe's test). Mortalities were transformed to arcsine square-root before ANOVA. Means (±standard error) of untransformed data are reported.

According to Table 2, the hexane portion and the chloroform portion have 100% acaricidal activity against two kinds of mites.

### [Example 3] Isolation of an acaricidal compound

Between the hexane portion and the chloroform portion prepared by Example 2, the acaricidal compounds were isolated from the hexane portion. Figure 1 shows the procedure that isolates the active compounds of the hexane portion derived from *Cinnamomum cassia* bark.

### 1st chromatography

The hexane portion (10 g) was chromatographed on a silica gel column (Merck 70-230 mesh, 600 g, 5.5 i.d. x 70 cm), and successively eluted with a stepwise gradient of hexane-ethyl acetate. The ratios of hexane to ethyl acetate used in the stepwise gradient were 100:1, 99:1, 95:5, 90:10, 80:20, 70:30, 60:40, 50:50 and 0:100, and fractions of each ratio were collected as H1, H2, H3, H4, H5, H6, H7 and H8 respectively. The eight fractions were tested as to their mite control efficacies by the acaricidal test of Test 1, and as a result, the three fractions, H2 (40.1% yield), H3 (4.2%yield) and H6 (8.8%yield) that had acaricidal activity were isolated. Each fraction was analyzed by thin layer chromatography (TLC), and fractions with a similar TLC pattern were pooled.

### 2nd chromatography

The active fractions isolated from the 1st silica gel chromatography were rechromatographed.

The H2, H3, and H6 fractions were isolated on a high performance liquid chromatography (Spectra System P2000, Thermo Separation Products, USA).

The H2 was eluted with hexane-ethyl acetate (9:1) at a flow rate of 4.0 ml/min. The column was a µ Porasil silica (19 x300 mm, Waters) and detected at 260 nm. The three fractions, H21, H22 and H23 were obtained and the H23 fraction was found to be the active fraction, a compound **I**. The H3 fraction was eluted with hexane-ethyl acetate (8:2) in HPLC. H31, H32, H33 and H34 were obtained and the H32 fraction was found to be active.

The H6 fraction was eluted with hexane-ethyl acetate (7:3) in HPLC. H61, H62 and H63 were obtained and the H62 fraction was found to be a **compound II.**

### 3rd chromatography

The active H32 fraction prepared by the second chromatography was further isolated.

The H32 fraction was eluted with hexane:ethyl acetate (10:1) in silica gel chromatography and the active fraction H322 and the inert fractions H321, H322, H323 and H324 were isolated.

### 4th chromatography

The active H322 fraction prepared by the 3rd chromatography was further isolated.

The H322 fraction was eluted with hexane:ethyl acetate (25:1) in silica gel chromatography and the active fraction H3223 and the inert fractions H3221, H3222 were isolated.

### 5th chromatography

The active H3223 fraction prepared by the 4th chromatography was further isolated.

The H3223 fraction was eluted with chloroform:methanol (5:1) in silica gel chromatography and the active fraction H32232 was isolated.

### 6th chromatography

The active H32232 fraction prepared by the 5th chromatography was further isolated.

The H32232 fraction was eluted with chloroform:methanol (30:1) in silica gel chromatography and the active fraction H322322 was isolated.

The H322322 fraction was eluted with hexane:ethyl acetate (100:1) in µ Porasil silica (19 x300 mm, Waters) at a flow rate of 4.0 Mℓ/min, absorbance of 260 nm. The Three fractions, H3223221, H3223222, H3223223, were obtained and the H3223223 fraction was found to be compound III.

### Analysis of the active compounds

Structural determination of the active fractions (compound I, compound **II,** compound **III**) isolated from Example 3 (a), (b) and (c) was made by spectral analysis. ¹H and ¹³C NMR spectra were recorded in deuterochloroform with a Bruker AM-500 spectrometer at 400 and 100 MHz, respectively. EI-MS spectra were obtained on a JEOL JMS-DX 30 spectrometer.

[Test 2] The active compounds of Example 3 were measured using the direct contact application.

### Acaricidal test

(a) The acaricidal activity of *trans*-cinnamaldehyde, cinnamyl alcohol and salicylaldehyde contained in *Cinnamomum cassia* was determined by the direct contact application, and the results are shown in Table 3 and Table 4.

**[Table 3]**

| Cone(mg/tube) | Mortality (Means ±standard error, %) | | | | | |
|---|---|---|---|---|---|---|
| | trans-cinnamaldehyde | | cinnamyl alcohol | | salicylaldehyde | |
| | 24hr | 48hr | 24hr | 48hr | 24hr | 48hr |
| 1 | 100a | 100a | 99.0±1.0a | 100a | 100a | 100a |
| 0.5 | 84.0±5.2a | 94.0±2.6a | 90.0±2.6a | 97.0±1.9a | 89.0±5.2a | 92.0±1.6a |
| 0.4 | 33.0±2.5b | 42.0±4.2b | 56.0±2.8b | 62.0±2.6b | 44.0±2.8b | 46.0±2.6b |
| 0.3 | 25.0±2.5bc | 32.0±2.8b | 35.0±2.5c | 40.0±3.7b | 22.0±2.6c | 27.0±2.5c |
| 0.25 | 9.0±1.9cd | 10.0±2.6bc | 15.0±1.9d | 14.0±2.6c | 7.0±3.0d | 8.0±2.8d |
| 0.2 | 7.0±1.0cd | 9.0±1.0c | 6.0±1.2d | 10.0±1.2c | 6.0±1.1d | 9.0±1.0d |
| 0.125 | 6.0±3.5d | 9.0±2.5c | 1.0±1.0e | 3.0±1.9d | 0e | 0e |
| Control | 0e | 0d | 0e | 0d | 0e | 0e |

Means followed by the same letter in column are not significantly different (*P* = 0.05, Scheffe's test). Mortalities were transformed to arcsine square-root before ANOVA. Means (±standard error) of untransformed data are reported,

Table 3 shows acaricidal activity against *D. pteronyssinus* in the acaricidal test at 1.0 mg, and the acaricidal activity of all of active compounds was 100% 48 hours after treatment. At 0.5 mg, after 24 hours *trans-*cinnamaldehyde had 84.0% acaricidal activity, cinnamyl alcohol had 90.0% acaricidal activity, and salicylaldehyde had 89.0% acaricidal activity. But at 0.4 mg and less, there was no significant acaricidal activity.

**[Table 4]**

| Conc(mg/tube) | Mortality (Means ±standard error, %) | | | | | |
|---|---|---|---|---|---|---|
| | *trans*-cinnamatdehyde | | cinnamyl alcohol | | salicylaldehyde | |
| | 24hr | 48hr | 24hr | 48hr | 24hr | 48hr |
| 1 | 99.0a^{c} | 100a | 99.0±1.0a | 100a | 100a | 100a |
| 0.5 | 94.0±2.6a | 96.0±2.3a | 90.0±2.6a | 97.0±1.9a | 99.0±1.0a | 100a |
| 0.4 | 41.0±2.5b | 45.0±2.5b | 58.0±2.6b | 65.0±1.9ab | 44.0±2.8b | 48.0±2.8b |
| 0.3 | 32.0±1.6bc | 39.0±2.5bc | 39.0±2.6b | 45.0±1.9b | 27.0±1.9c | 37.0±1.9bc |
| 0.25 | 21.0±2.5cd | 30.0±8.7bc | 10.0±3.8c | 10.0±4.1c | 26.0±2.0c | 34.02.6bc |
| 0.2 | 19.0±2.5cd | 29.0±1.9bc | 7.0±1.0c | 7.0±1.0c | 22.0±1.2c | 28.0±1.6c |
| 0.125 | 18.0±2.6d | 23.0±3.4c | 1.0±1.0d | 2.0±1.2c | 20.0±1.6c | 27.0±3.8c |
| Control | 0e | 0d | 0d | 0d | 0d | 0d |

Means followed by the same letter in column are not significantly different (*P* = 0.05, Scheffe's test). Mortalities were transformed to arcsine square-root before ANOVA. Means (±standard error) of untransformed data are reported.

Table 4 shows acaricidal activity against *D. farinae*. In the acaricidal test at 1 mg, the acaricidal activity of all the active compounds was 100% 48 hours after treatment. At 0.5 mg, after 24 hours *trans*-cinnamaldehyde had 94.0% acaricidal activity, cinnamyl alcohol had 90.0% acaricidal activity, and salicylaldehyde had 99.0% acaricidal activity. But at 0.3 mg and less, there was no significant acaricidal activity.

### [Example 4]

In order to confirm the synergistic effect for the three kinds of acaricidal compounds prepared by example 3, a concentration that had no acaricidal activity was determined. Up to 0.25 mg, there was no acaricidal activity for the two kinds of house dust mites, thus the synergistic effect was measured at 0.25 mg.

A mixture was prepared by blending in a ratio of 1 to 1 with 0.25 mg of each active compound, as follows.
(1) *trans*-cinnamaldehyde + cinnamyl alcohol
(2) *trans*-cinnamaldehyde + salicyl aldehyde
(3) salicyl aldehyde.+ cinnamyl alcohol
(4) *trans*-cinnamaldehyde + cinnamyl alcohol +salicyl aldehyde

The synergistic effect of the mixtures was tested for acaricidal activity against *D. farinae* and *D. pteronyssinus.* Table 7 shows the synergistic effects.

**[Table 7]**

| Mixture | Conc (mg/tube) | Mortality (Means±standard error, %) | | | |
|---|---|---|---|---|---|
| | | *D. farinae* | | *D.pteronyssinus* | |
| | | 24hr | 48hr | 24hr | 48hr |
| *trans*-cinnamaldehyde + cinnamyl alcohol | 0.25+0.25 | 91.0±3.4a | 98.0±0a | 83.0±1.0b | 100a |
| *trans*-cinnamaldehyde + salicyl aldehyde | 0.25+0.25 | 95.0±1.9a | 99.0±0a | 93.0±2.5a | 100a |
| salicyl aldehyde.+ cinnamyl alcohol | 0.25+0.25 | 99.0±1.0a | 100a | 95.0±1.9a | 100a |
| *trans*-cinnamaldehyde + cinnamyl alcohol +salicyl aldehyde | 0.25+0.25 +0.25 | 100a | - | 99.2±0.8a | 100a |
| benzyl benzoate | 025 | 100a | No | 88.8±3.9b | no |
| dibutyl phtalate | 0.25 | 92.0±3.8a | No | 95.2±1.5a | no |
| DEET | 025 | 96.8±3.2a | No | 16.8±3.4c | no |
| Control | 0b | 0b | 0d | 0b | 0b |

Means followed by the same letter in column are not significantly different (*P* = 0.05, Scheffe's test). Mortalities were transformed to arcsine square-root before ANOVA. Means (±standard error) of untransformed data are reported.

At 24 hours, each of the mixtures had a strong acaricidal activity. The mixture (*trans*-cinnamaldehyde + cinnamyl alcohol +salicyl aldehyde) had the strongest synergistic effect against two kinds of mites 24 hours after treatment, but at 48 hours, there was no significant difference when compared to the other mixtures. It was confirmed that all three kinds of acaricidal compounds had synergistic effects.

The active compounds were compared to organic synthetic compounds (benzyl benzoate, dibutyl phtalate and DEET) which have a strong acaricidal activity. 0.25 mg each of the organic synthetic compounds were treated on *D. farinae* and *D. pteronyssinus,* and 24 hours after treatment benzyl benzoate had 100% and 88.8% mortality, dibutyl phtalate had 92.0% and 95.2% mortality, and DEET had 96.8% and 16.8% mortality against *D. farinae* and *D. pteronyssinus*, respectively. Therefore the acaricidal activity of the compounds derived from *Cinnamomum cassia* compare favorably to that of the synthetic compounds.

As described above, *Paeonia suffruticosa, Cnidium officinale,* and *Cinnamomum cassia*, have acaricidal activity.

Also, *trans*-cinnamaldehyde, cinamyl alcohol and salicylaldehyde have acaricidal activity and when they are blended, they have a synergistic effect.

## Claims

1. Use of a plant extract, the plant extract being a methanol extract from Paeonia suffruticosa, Cnidium officinale, or Cinnamomum cassia, as an acaricide.

2. The use according to claim 1, wherein the methanol extract is separated by using hexane.

3. The use according to claim 1, wherein the methanol extract is separated by using chloroform.

4. The use according to claim 1, the plant extract is eluted by a solvent, the solvent comprising hexane and ethyl acetate.

5. The use according to claim 4, wherein the plant extract is eluted successively by the solvent comprising a different volume ratio of hexane and ethyl acetate.

6. The use according to claim 4, wherein the solvent comprises 60~99% by volume hexane and 1~40% by volume ethyl acetate.

7. The use according to claim 4, wherein the plant extract is further eluted by another solvent, the solvent comprising chloroform and methanol.

8. The use according to claim 1, wherein the plant extract comprises a mixture of trans-cinnamaldehyde, cinnamyl alcohol and salicylaldehyde.

9. The use according to claim 1 to 8, wherein the acaricide is formulated as a spray, a solution type ointment and a solid type ointment gel or smoke.

10. The use of any of claims 1 to 9, wherein said acaricide is for application to house dust mites.

11. The use of any of claims 1 to 9, wherein said acaricide is for application to Dermatophaeoides piteronyssinus and Dermatophagoides farinae.

## Patentansprüche

1. Verwendung eines Pflanzenextraktes als ein Akarizid, wobei der Pflanzenextrakt ein Methanolextrakt von *Paeonia suffruticosa, Cnidium officinale* oder *Cinnamomum cassia* ist.

2. Die Verwendung gemäß Anspruch 1, wobei der Methanolextrakt durch Verwenden von Hexan getrennt wird.

3. Die Verwendung gemäß Anspruch 1, wobei der Methanolextrakt durch Verwenden von Chloroform getrennt wird.

4. Die Verwendung gemäß Anspruch 1, wobei der Pflanzenextrakt mit einem Lösungsmittel verdünnt wird, wobei das Lösungsmittel Hexan und Ethylacetat umfasst.

5. Die Verwendung gemäß Anspruch 4, wobei das Pflanzenextrakt nacheinander durch das Lösungsmittel, das ein unterschiedliches Volumenverhältnis von Hexan und Ethylacetat umfasst, verdünnt wird.

6. Die Verwendung gemäß Anspruch 4, wobei das Lösungsmittel 60-99 Vol.-% Hexan und 1-40 Vol.-% Ethylacetat umfasst.

7. Die Verwendung gemäß Anspruch 4, wobei der Pflanzenextrakt weiter durch ein anderes Lösungsmittel verdünnt wird, wobei das Lösungsmittel Chloroform und Methanol umfasst.

8. Die Verwendung gemäß Anspruch 1, wobei der Pflanzenextrakt eine Mischung von trans-Cinnamaldehyd, Cinnamylalkohol und Salicylaldehyd umfasst.

9. Die Verwendung gemäß Anspruch 1 bis 8, wobei das Akarizid als ein Spray, eine Lösungssalbe, ein festes Salbengel oder Rauch formuliert wird.

10. Die Verwendung nach einem der Ansprüche 1 bis 9, wobei das Akarizid für die Anwendung bei Hausstaubmilben ist.

11. Die Verwendung nach einem der Ansprüche 1 bis 9, wobei das Akarizid für die Anwendung bei *Dermatophagoides piteronyssinus* und *Dermatophagoides farinae* ist.

## Revendications

1. Utilisation d'un extrait de plantes an tant qu'acaricide, l'extrait de plantes étant un extrait méthanolique à partir de Paeonia suffruticosa, de Cnidium officinale, ou de Cinnamomum cassia, sous forme d'un acaricide.

2. Utilisation selon la revendication 1, dans laquelle l'extrait méthanolique est séparé en utilisant de l'hexane.

3. Utilisation selon la revendication 1, dans laquelle l'extrait méthanolique est séparé en utilisant du chloroforme.

4. Utilisation selon la revendication 1, l'extrait de plantes étant élué par un solvant, le solvant comprenant de l'hexane et de l'acétate d'éthyle.

5. Utilisation selon la revendication 4, dans laquelle l'extrait de plantes est élué successivement par le solvant comprenant un rapport en volume différent d'hexane et d'acétate d'éthyle.

6. Utilisation selon la revendication 4, dans laquelle le solvant comprend de 60 % à 99 % en volume d'hexane et de 1 % à 40 % en volume d'acétate d'éthyle.

7. Utilisation selon la revendication 4, dans laquelle l'extrait de plantes est en outre élué par un autre solvant, le solvant comprenant du chloroforme et du méthanol.

8. Utilisation selon la revendication 1, dans laquelle l'extrait de plantes comprend un mélange de trans-cinnamaldéhyde, d'alcool cinnamylique et de salicylaldéhyde.

9. Utilisation selon les revendications 1 à 8, dans laquelle l'acaricide est formulé sous forme d'un aérosol, d'un onguent de type solution d'un onguent de type solide d'un gel ou d' un fumigant.

10. Utilisation selon l'une quelconque des revendications 1 à 9, dans laquelle ledit acaricide est destiné à une application aux acariens de la poussière domestique.

11. Utilisation selon l'une quelconque des revendications 1 à 9, dans laquelle ledit acaricide est destiné à une application aux Dermatophagoides piteronyssinus et aux Dermatophagoides farinae.
